Europäisches Patentamt

(19) European Patent Office

Office européen des brevets

(11) Publication number: **0 223 759**
B1

# EUROPEAN PATENT SPECIFICATION

(45) Date of publication of the patent specification:
04.04.90

(51) Int. Cl.⁴: **F16D 1/06**, B61C 15/00

(21) Application number: 86850376.4

(22) Date of filing: 29.10.86

(54) Apparatus having controlled friction and method for establishing controlled friction in such apparatus.

(30) Priority: 21.11.85 SE 8505509

(43) Date of publication of application:
27.05.87 Bulletin 87/22

(45) Publication of the grant of the patent:
04.04.90 Bulletin 90/14

(84) Designated Contracting States:
CH DE FR GB IT LI SE

(56) References cited:
AU-B- 474 393
DE-C- 559 779
DE-C- 3 132 363
DE-C- 3 343 783
FR-A- 1 290 282
FR-A- 2 173 303
GB-A- 2 164 358
US-A- 2 354 656
US-A- 3 503 121
US-A- 4 093 842

(73) Proprietor: FFV Transmission Aktiebolag,
S-580 13 Linköping(SE)

(72) Inventor: Disborg, Lennart, c/o FFV Transmission AB,
S-580 13 Linköping(SE)

(74) Representative: Avellan-Hultman, Olle, Avellan-Hultman
Patentbyra AB P.O. Box 5366, S-102 46 Stockholm 5(SE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to an apparatus in machine parts which apparatus is formed with a new type of friction which may be referred to as controlled friction, and the invention is more particularly directed to providing a controlled friction between at least two mutually connectable or connected machine parts, whereby the coefficient of friction between said at least two machine parts is different in two directions which are substantially perpendicular to each other, especially without any change of shape of any of the machine parts.

By controlled friction is meant, in this connection, that the machine parts are prepared so that the friction coefficient is different in different directions of the apparatus, especially so that the friction coefficient is substantially increased for one direction of the apparatus, whereas the friction coefficient is maintained normal or low in another direction, or alternatively that the friction coefficient becomes substantially reduced in one direction and is maintained unchanged and normal in another direction.

The invention also includes the case that the friction coefficient, for instance depending on the design or the preparation of the surfaces varies in different directions, and it ist thereby possible to establish controlled friction according to the invention so that the friction is the same in all directions.

The invention is in the first place intended for machine parts of metal, but it is in many cases well useful also for objects of other materials like synthetic resins or combinations of cooperating elements, in which one element is of plastic and the other element of metal.

As examples of controlled friction the following specification will illustrate some different cases, which should, however be considered only as explanating examples.

Example 1: In order to simplify the mounting and dismounting, on one hand, of a shaft in relation to a hub, and to provide, on the other hand, a high friction at torque transmittance between the shaft and the hub it would be desired to keep the friction relatively low in the mounting/dismounting direction, generally in the axial direction, whereas the friction preferably should be high in the torque transmittance direction, that is in the direction of rotation.

Example 2: In some cases it may be desired to increase the friction of a shaft coupling both in the axial direction and in the direction of rotation, at the same time as the friction is maintained low during the mounting, and this is possible in case that the mounting is made by a kind of screw movement.

Example 3: In order to increase the traction ability of an object in relation to another object it is desired to increase th friction in the traction direction, whereas it may be advantageous to keep the friction low in another direction, or it is alternatively of less interest what type of friction is obtained in such other direction.

Example 4: In still other cases a constant increase of the friction coefficient between two mutually movable objects may be obtained.

Example 5: When mounting and dismounting mechanical friction joints of the type which use cone elements as clamping elements there is always a movement in the joint when the cone elements are pulled towards each other. This movement is generally axial, but the largest forces of the joint to be transmitted appear in the direction of rotation. It is thereby wanted that the friction is low when mounting and dismounting the joint but high when the joint is used.

Many different methods for increasing the friction between two mutually cooperating machine parts are known. The German patent 559 779 shows an apparatus having a shrinkage fit between the shaft and the hub, in which the shaft, as previously known, is formed with a number of parallelly extending rifles or grooves which are machined in the shaft, and into which the hub material penetrates when the two machine elements are shrinked together so that a non-rotatable joint is obtained. For utilizing the said method it is necessary to cutwork one of the machine elements, in this case the shaft, and it may be difficult and impossible to separate the elements and re-joint the elements.

The US patent 2 354 656 shows another method of joining two machine elements by a shrinkage fit in which the female coupling element is of a relatively deformable material and is in the axial direction formed with convex walls, which in connection to the shrinking together with the shaft is formed to axial walls having an intimate contact with the shaft. In this type of shrinkage fit one of the machine elements must have a special shape, and the joint is a sole shrinkage fit without any friction increasing means.

The US patent 3 503 121 relates to a bearing ring which is made self-loking in that the bore of said ring is formed with a resilient mounting structure for co-operation with the outer surface of a shaft. Such resilient means, however, is not suited for transmitting torque between for instance a rotatable shaft and hub coupling.

The basic idea of the invention as defined in claim 1 is that at least one of the machine elements is formed with portions of harder or softer material provided in a predetermined way, namely so that the harder portions are located on one or several lines or similar formations which provide a certain angle, for instance a right angle, to the torque transmitting direction, in other words so that the harder or softer portions respectively in a shaft-hub coupling are provided axially or in screw formation. In many cases it may be of value that both machine elements are formed with such harder or softer portions of substantially fitting type.

The invention is mainly characterized in that the controlled friction is obtained in that one of or both machine parts is/are formed with several, preferably parallelly extending, surface portions of a harder or softer, non-resilient material than the remaining material of the machine part or parts said parallel portions of harder or softer material being provided in a direction giving a relatively high friction coefficient in a direction of torque transmittance between the machine parts and a relatively low friction coefficient in a direction substantially perpendicularly thereto, preferably the mounting direction thereof.

There may be several different ways of providing the said harder or softer portions of the machine elements, and basically there are two different ways, namely either to increase or reduce the friction coefficient partially and preferably over narrow or wide portions having respectively increased or reduced material hardness. Said portions of the machine part or parts are to be formed by a non-destroying method, by which is meant a method which does not change the shape and size of the machine part.

For reducing the friction coefficient of certain portions of the material it is possible to treat material to provide a reduction of the hardness, or by partially "doping" particles into the material, whereby is means that friction reducing particles are being pressed or baked to become embedded in said material.

For increasing the friction coefficient it is possible to quench the machine part or machine parts locally in any known manner, for instance by a laser quenching method, so that the part or parts obtain quenched portions having an increased hardness in the direction that favourizes the intended increased friction. Another possibility is to "dope" the material of one or both machine elements by pressing or baking harder particles into the material in a formation that increases the friction in a predetermined desired direction and leaves the friction unchanged in another direction.

The quenching, for instance the laser quenching, is favourable in that the method can be used for available objects, whereby said objects are not influenced, eitherwise that it is possible to adapt the shape, the localisation and the size of the quenched portions so as to obtain the very desired effect. Any and all objects can be quenched independently of the shape and size, and the quenching normally is made in the form of a certain number of parallel lineary quenching portions which may extend axially, in screw formation or in any other formation. The number of parallel quenching portions is selected according to the circumstances and to the intended effect. In this case the invention presupposes that both machine parts are designed for being joined by a press fit, whereby the quenched portions are slightly pressed into the softer surface portions of the counter element. In case both machine elements are formed with quenched portions it is foreseen that said quenched portions coincide with each other so that the quenched portions of one machine element are located between the quenched elements of the cooperating other machine element when the elements are pressed together.

The joining of the machine elements provided as mentioned above follows relatively easy whereas the elements are locked in the direction of rotation by a substantially higher force than obtained in case of a corresponding normal press or shrinkage fit.

As mentioned above it is possible to provide the quenched portions in a screw formation, whereby the joining and a possible later dismounting likewise follows in a screw movement. Such an apparatus gives an increased friction both in the axial direction and in the direction of rotation, but it is obvious that the system is not suited for reversable torque transmitting movements.

It is also possible to provide the quenched portions by a point by point quenching, whereby it is foreseen that the quenched points are located on line with each other like in the above mentioned lineary quenching.

When "doping" the material of one of the machine elements with harder particles it is also possible to start with available machine elements and to press such harder particles into the surface layer of one or both machine elements, or so that the machine element or elements are formed with such harder particles already during the forging operation or in any other stage of the element manufacturing process. The machine element can as an entire object be made by pressing of powered material, whereby it is foreseen that powder having a higher hardness is applied in a predetermined direction, for instance in rows or lines which are parallelly with each other, or in screw formation. The particles may be hard metal particles, particles of sintered material, ceramic particles or any other hard particles which are well known within the powder metallurgical field.

The invention is illustrated diagrammatically in the accompanying drawings which illustrate a couple of embodiments of the invention. Figure 1 shows an embodiment of sa shaft-hub coupling, figure 2 shows an other embodiment of a shaft-hub coupling and figure 3 shows a third embodiment of a shaft-hub coupling. Figures 4 and 5 show cone coupling joints in which some surface portions have been modified with reference to the friction.

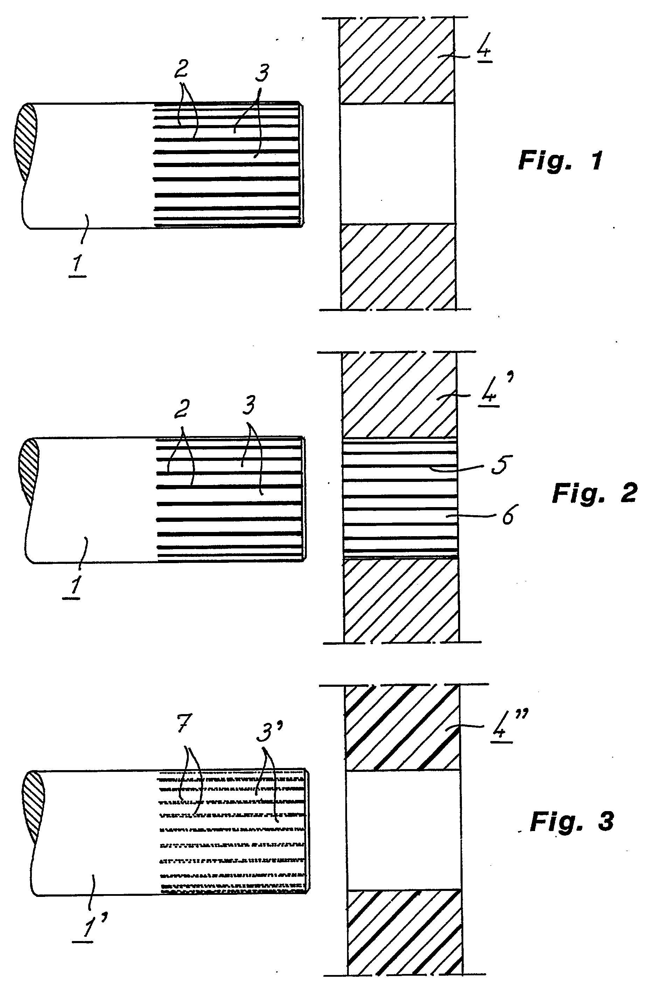

Figure 1 shows a shaft 1, which at the shaft end is hardened or quenched locally in the form of several axially extended quenched narrow or wide zones 2, the material of which, after the quenching operation, consequently become harder than the material of the intermediate portions 3. In the illustrated case the hub 4 has no quenched portions. The shaft and the hub are, as well known, formed as a pressed joint or a shrinkage fit joint. In the mounted condition the quenched portions 2 have penetrated slightly into the material of the hub thereby providing an increased resistance against the rotation between the shaft and the hub. It is, however, quite possible to dismount the hub from the shaft by pulling the shaft out of the hub in the axial directiion.

Figure 2 shows an apparatus which differs from that of figure 1 only in that both the shaft end and the hub are in this case formed with quenched, axially extending portions 2 and 5 respectively having substantially the same mutually distribution, so that the quenched portions 2 and 5 between the two elements, when the elements are joined, are located at the softer parts 3 and 6 respectively at the counter element.

Figure 3 also shows like in figure 1, a shaft end, which has been doped with particles 7 of a material which is harder than the material of the remaining part of the shaft and which are located on line with each other like the above described quenched portions.

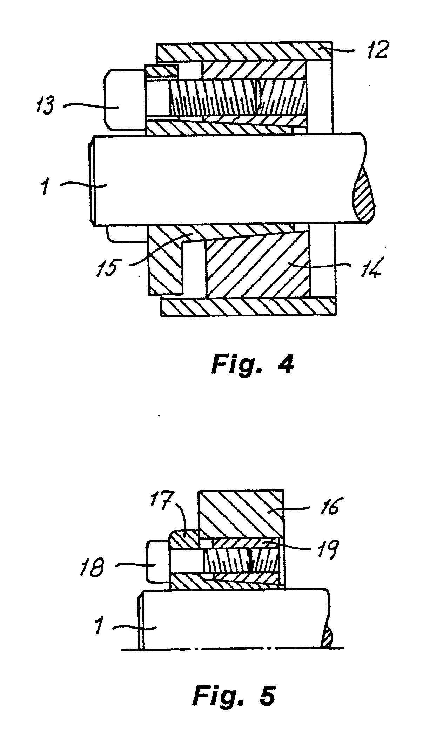

Figure 4 shows a shaft-hub coupling having a friction joint allowing the hub 12 to move axially when the joint is mounted, that is when the screw 13 is pulled. Thereby the part 14 and the hub 12 move axially on the cone element 15. When mounted, the joint is intended to mainly transfer forces in the direction of rotation, and this is made either in that the part 14 or the cone element 15 or both are formed with axial and parallell friction increasing or friction reducing narrow or wide portions round the common surface, which portions provide the intended controlled friction.

Figure 5 shows a shaft coupling of friction joint type which does not allow the hub 16 to move axially when the joint is connected. This is prevented in that the flange part of the cone element 17 extends outside the inner diameter of the hub 16. When the screw 18 is pulled the hub 16 only is pressed against the flange of the element. When mounting the joint the cone part 19 must be pressed to the cone element 17 and to be forced to expand towards the hub 16, and then the cone part 19 has to slide both against the cone element 17 and the hub 16, and at the same time it is necessary that the said two contact surfaces transmit as large friction forces as possible. This is substantially simplified if the surfaces between the cone part 19, on one hand, and the cone element 17 and the hub 16, on the other hand, or all surfaces, are formed so as to give the above defined controlled friction thereby giving a low friction of the surfaces for mounting/dismounting purposes of the joint at the same time as the joint can transmit large torques in the direction of rotation.

In most of the above examples the machine parts may be made of metal, but they may alternatively be made of other materials. It is thus advantageous to form the shaft of figures 1–3 of metal and the hub of a suitable plastic material, a pressed fibrous material or a similar material, and it is also possible to form both the shaft and the hub of plastic material, a fibrous material or a similar material especially for the application according to which one or both machine parts are doped with particles of a hard material.

The invention makes it possible to increase the friction coefficient between two interconnected machine parts, and it is quite possible to increase the friction coefficient with up to 50%.

## Claims

1. Apparatus for providing a controlled friction between at least two mutually connectable or connected machine parts of metal, plastic, a pressed fibrous material or a similar material (e.g. 1, 4; 14, 15; 17, 19, 16), whereby the coefficient of friction between said at least two machine parts is different in two directions which are substantially perpendicular to each other, characterized in that the controlled friction is obtained in that one of or both machine parts (1, 4; 14, 15; 17, 19, 16) is/are formed with several, preferably parallelly extending surface portions (2, 5; 7) of a harder or softer material than the remaining material of the machine part or parts (1, 4; 14, 15; 17, 19, 16), which surface portions of harder or softer material are non-resilient and are provided in a direction giving a relatively high coefficient of friction in a direction of torque transmittance between the machine parts and a relatively low coefficient of friction in a direction substantially perpendicularly thereto, preferably the mounting direction thereof.

2. Apparatus according to claim 1, characterized in that the portions (2, 5) of harder or softer material are provided at the end of a shaft (1) and/or in the bore of a cooperating hub (4; 4'; 4") and in a direction thereof corresponding to the mounting direction for the shaft and hub.

3. Apparatus according to claim 1 or 2, characterized in that the hard portions (2; 9) are case-hardened or surface hardened portions, or formations of particles (7) which are harder than the remaining material of the machine parts, and which particles are embedded in the material of one of or both machine parts (1', 4"), or that the soft portions are softened portions or portions in which non-resilient particles of a softer material than the remaining material of the machine part or parts, or particles of a self lubricating type have been embedded.

4. Method of providing a controlled friction in mutually cooperating machine parts like a shaft-hub joint (1, 4), according to any of the preceding claims, characterized in that one of or both machine parts is/are formed, by a method which does not change the shape and size of the machine part or parts, with several portions (2; 7; 9) of a harder or softer, non-resilient material than the material of the machine part or parts and provided in a direction suitable to increase or reduce the coefficient of friction between said two cooperating machine parts in a desired direction and to maintain the friction coefficient substantially unchanged in another direction, especially perpendicularly to the first mentioned direction.

5. Method according to claim 4, characterized in that the portions (2; 9) of harder material are provided by case hardening or surface hardening, for instance laser hardening, of the machine part or parts (1; 8) in the form of parallel narrow or wide portions (2) or rows of quenching points (7) which in a shaft-hub joint or similar means extend substantially parallelly to the mounting direction for the machine parts (1, 4).

6. Method according to claim 5, characterized in that the portions of hard and soft material respectively are provided by pressing or baking particles (7) into one of or both machine parts, which particles (7) are non-resilient and harder or softer respectively than the material of said machine part or parts, whereby the particles are provided substantially on line with each other in the mounting direction for a shaft-hub joint.

7. Method according to any of claims 4–6, characterized in that the harder or softer portions are provided in a screw formation.

**Patentansprüche**

1. Einrichtung zur Erzeugung einer regulierten Reibung zwischen mindestens zwei miteinander verbindbaren oder verbundenen Maschinenteilen aus Metall, Kunststoff, gepreßtem Fasermaterial oder ähnlichem Material (z.B. 1, 4; 14, 15; 17, 18, 19), wobei der Reibungskoeffizient zwischen den mindestens zwei Maschinenteilen in zwei Richtungen, die im wesentlichen senkrecht zueinander verlaufen, unterschiedlich ist, dadurch gekennzeichnet, daß die regulierte Reibung dadurch erhalten wird, daß eine oder beide Maschinenteile (1, 4; 14, 15; 17, 18, 19) mit mehreren, vorzugsweise parallel verlaufenden Oberflächenabschnitten (2, 5; 7) aus einem Material versehen ist/sind, welches härter oder weicher als das verbleibende Material des Maschinenteils oder der -teile ist, wobei die Oberflächenabschnitte aus härterem oder weicherem Material unelastisch und so ausgerichtet sind, daß sie einen relativ hohen Reibungskoeffizienten in Richtung einer Drehmomentübertragung zwischen den Maschinenteilen und einen relativ niedrigen Reibungskoeffizienten im wesentlichen senkrecht dazu, vorzugsweise in ihrer Montagerichtung, erzeugen.

2. Einrichtung nach Anspruch 1, dadurch gekennzeichnet, daß die Abschnitte (2, 5) aus härterem oder weicherem Material am Ende einer Welle (1) und/oder in der Bohrung einer zugehörigen Nabe (4; 4', 4") vorgesehen sind und sich dazu in einer Richtung erstrecken, die der Montagerichtung der Welle und Nabe entspricht.

3. Einrichtung nach Anspruch 1 oder 2, dadurch gekennzeichnet, daß die harten Abschnitte (2; 5) einsatzgehärtete oder oberflächengehärtete Abschnitte oder Formationen aus Partikeln (7) sind, welche härter sind als das verbleibende Material der Maschinenteile und in das Material eines oder beider Maschinenteile (1', 4") eingebettet sind, oder daß die weichen Abschnitte enthärtete Abschnitte oder solche Abschnitte sind, in die nichtelastische Partikeln eines Materials, welches weicher ist als das verbleibende Material des Maschinenteils oder der -teile, oder Partikeln mit selbstschmierenden Eigenschaften eingebettet sind.

4. Verfahren zum Erzeugen einer regulierten Reibung in miteinander zusammenwirkenden Maschinenteilen, wie einer Wellen-Naben-Verbindung (1, 4), nach einem der vorhergehenden Ansprüche, dadurch gekennzeichnet, daß eines oder beide Maschinenteile unter Anwendung eines Verfahrens, welches die Form und Größe des Maschinenteils oder der -teile nicht ändert, mit mehreren Abschnitten (2; 7; 9) versehen wird/werden, die aus einem nichtelastischen Material bestehen, welches härter oder weicher als das Material des Maschinenteils oder der -teile ist, und die sich in einer Richtung erstrecken, welche geeignet ist, den Reibungskoeffizienten zwischen den beiden zusammenwirkenden Maschinenteilen in einer gewünschten Richtung zu erhöhen oder zu erniedrigen und den Reibungskoeffizienten in einer anderen Richtung, vorzugsweise senkrecht zu der erstgenannten Richtung, im wesentlichen unverändert zu lassen.

5. Verfahren nach Anspruch 4, dadurch gekennzeichnet, daß die Abschnitte (2; 5) aus härterem Material durch Einsatzhärtung oder Oberflächenhärtung, beispielsweise Laserhärtung, des Maschinenteils oder der -teile (1; 8) in Form paralleler schmaler oder breiter Abschnitte (2) oder Reihen von Abschreckpunkten (7) ausgebildet werden, die sich bei einer Wellen-Naben-Verbindung oder einer ähnlichen Anordnung im wesentlichen parallel zur Montagerichtung der Maschinenteile (1, 4) erstrecken.

6. Verfahren nach Anspruch 5, dadurch gekennzeichnet, daß die Abschnitte aus hartem und weichem Material jeweils durch Einpressen oder Einsintern von Partikeln (7) in einen oder beide Maschinenteile ausgebildet werden, wobei die Partikeln (7) aus einem nichtelastischen Material bestehen, welches härter bzw. weicher als das Material des Maschinenteils oder der -teile ist, und wobei die Partikel in der Montagerichtung der Wellen-Naben-Verbindung im wesentlichen aufeinander ausgerichtet sind.

7. Verfahren nach einem der Ansprüche 4 bis 6, dadurch gekennzeichnet, daß die härteren oder weicheren Abschnitte schraubenförmig ausgebildet sind.

**Revendications**

1. Appareil pour produire un frottement déterminé entre au moins deux pièces de machine reliées ou pouvant être reliées l'une à l'autre, en métal, en matière plastique, en matière fibreuse comprimée ou en une matière similaire (par exemple 1, 4; 14, 15; 17, 19, 16), le coefficient de frottement étant différent entre lesdites, au moins deux, pièces de machine dans deux directions qui sont sensiblement perpendiculaires entre elles, caractérisé en ce que le frottement déterminé est obtenu par le fait que l'une des pièces de machine ou que les deux pièces de machine (1, 4; 14, 15; 17, 19, 16) est/sont formées de façon à présenter plusieurs parties de surface (2, 5; 7) s'étendant de préférence parallèlement entre elles, en une matière plus dure ou plus tendre que la matière restante de la pièce ou des pièces de machine (1, 4; 14, 15; 17, 19, 16), lesquelles parties de surface en matière plus dure ou plus tendre ne sont pas élastiques et sont placées dans une direction donnant un coefficient de frottement relativement élevé dans une direction de transmission de couple entre les pièces de machine et un coefficient de frottement relativement faible dans une direction qui lui est sensiblement perpendiculaire, avantageusement la direction de leur montage.

2. Appareil selon la revendication 1, caractérisé en ce que les parties (2, 5) en matière plus dure ou plus tendre sont placées à l'extrémité d'un arbre (1) et/ou dans l'alésage d'un moyeu coopérant (4; 4'; 4") et dans une direction de celui-ci correspondant à la direction de montage de l'arbre et du moyeu.

3. Appareil selon la revendication 1 ou 2, caractérisé en ce que les parties dures (2; 9) sont des parties cémentées ou durcies en surface, ou des formations de particules (7) qui sont plus dures que la matière restante des pièces de machine, lesquelles particules sont noyées dans la matière d. l'une des, ou des deux, pièces de machine (1', 4"), ou en ce que les parties tendres sont des parties rendues plus tendres ou des parties dans lesquelles des particules non élastiques d'une matière plus tendre que la matière restante de la pièce ou des pièces de machine, ou bien des particules de type auto-lubrifiant, ont été noyées.

4. Procédé pour établir un frottement déterminé dans des pièces de machine mutuellement coopérantes, telles qu'un joint arbre-moyeu (1, 4), selon l'une quelconque des revendications précédentes, caractérisé en ce que l'une des, ou les deux, pièces de machine est/sont formées par un procédé qui ne modifie pas la forme ni la dimension de la pièce ou des pièces de machine, avec plusieurs parties (2; 7; 9) en une matière non élastique, plus dure ou plus tendre que la matière de la pièce ou des pièces de machine et prévues dans une direction propre à augmenter ou réduire le coefficient de frottement entre lesdites deux pièces coopérantes de machine dans une direction souhaitée et à maintenir le coefficient de frottement sensiblement inchangé dans une autre direction, en particulier perpendiculairement à la première direction citée.

5. Procédé selon la revendication 4, caractérisé en ce que les parties (2; 9) en matière plus dure sont réalisées par cémentation ou durcissement en surface, par exemple durcissement au laser, de la pièce ou des pièces (1; 8) de machine sous la forme de parties parallèles étroites ou larges (2) ou de rangées de pointes (7) de trempe qui, dans un joint arbre-moyeu ou un moyen similaire, s'étendent sensiblement parallèlement à la direction de montage des pièces (1, 4) de machine.

6. Procédé selon la revendication 5, caractérisé en ce que les parties en matière dure et en matière tendre sont réalisées respectivement par compression ou cuisson de particules (7) dans l'une des, ou les deux, pièces de machine, lesquelles particules (7) sont non élastiques et plus dures ou plus tendres, respectivement, que la matière de ladite pièce ou desdites pièces de machine, les particules étant placées sensiblement en alignement les unes avec les autres dans la direction de montage pour un joint arbre-moyeu.

7. Procédé selon l'une quelconque des revendications 4–6, caractérisé en ce que les parties plus dures ou plus tendres sont formées en vis.

Fig. 1

Fig. 2

Fig. 3

**Fig. 4**

**Fig. 5**